# EUROPEAN PATENT SPECIFICATION

(11) **EP 2 581 759 B1**
(45) Date of publication and mention of the grant of the patent: **04.06.2014**
(21) Application number: 12187903.5
(22) Date of filing: 10.10.2012
(51) Int. Cl.: G01S 7/48, G01S 7/491, G01V 8/10

(54) **Photoelectric sensor**
Fotoelektrischer Sensor
Capteur photoélectrique

(30) Priority: 12.10.2011 JP 2011224900
(43) Date of publication of application: 17.04.2013
(73) Proprietor: Azbil Corporation, Chiyoda-ku Tokyo 100-6419 (JP)
(72) Inventor: Kato, Taichirou, Tokyo, 100-6419 (JP); Kajita, Tetsuya, Tokyo, 100-6419 (JP); Hatanaka, Hiroshi, Tokyo, 100-6419 (JP); Takamiya, Tomohiro, Tokyo, 100-6419 (JP); Sato, Nagayuki, Tokyo, 100-6419 (JP)
(74) Representative: Tischner, Oliver

(56) References cited:
- JP-A- 2000 131 435
- US-A- 5 465 144
- US-B1- 7 684 016

## Description

### Field of Technology

The present invention relates to a photoelectric sensor for detecting a target based on a change in amount of light received.

### Background

In photoelectric sensors, a method is used for suppressing the noise signal that is caused by ambient light (for example, from an inverter-type fluorescent lamp with high-frequency illumination), wherein a pulse signal for driving a light-emitting element on a transmitter side is modulated at a frequency that is adequately high when compared to the frequency of the ambient light. Given this, light emitted from the transmitter is received on the light-receiving side, and the noise signal is suppressed through performing a band-pass filter (hereinafter termed "BPF") process on the signal of the light that has been received. The output signal from the BPF is demodulated using a rectifier and a low-pass filter (LPF), but, conventionally, it has been necessary, in the rectifier, to synchronize to the clock signal of the transmitter side. However, in a photoelectric sensor of thru-scan type, the transmitter and the receiver are structured separately, and it has not been possible to provide the clock signal from the transmitter to the receiver.

While, because of this, there is a method wherein the transmitter and the receiver are connected via a wire to provide the clock signal from the transmitter (referencing, for example, Japanese Unexamined Patent Application Publication 2007-40720 ("JP '720")), this is undesirable due to the wiring work for installation of the photoelectric sensor. On the other hand, while there is a method wherein the clock signal is reproduced from data that is transmitted through ordinary radio communications, in some cases, in a photoelectric sensor of thru-scan type, the communication path is blocked by the object that is to be detected, making it extremely difficult to reproduce the clock signal. There is also a method wherein the BPF output is evaluated directly, using a comparator, without the receiver synchronizing with the transmitter through a clock signal. (See, for example, Japanese Patent 4243824 ("JP '824")) In the receiver in JP '824, a comparator is used to turn the output signal levels of the BPF into a pulse signal that is limited to a limit level that is determined in advance, where a pulse-width comparator suppresses pulses that have widths that are less than a limit width that has been set in advance. Doing so eliminates the interference pulses that have extremely narrow widths, pulses could not arrive from the transmitter. In contrast, because pulses with extremely wide widths may be produced by overlap between valid pulses and interference pulses, those are narrowed to a limited width. Given this, in the evaluation unit, the width of each pulse is widened, and integrated, and compared to a threshold value to detect the signal level.

In the case of the aforementioned JP '720, a problem is that it is necessary, in the rectifier in the receiver, to synchronize to the clock signal of the transmitter side.

In contrast, while this synchronization is unnecessary in the case in JP '824, the pulse widths are measured without demodulating the signals that have undergone high-frequency modulation, and thus it is necessary for the comparator, the pulse-width comparator, and the evaluating unit to operate at high speeds, resulting in a problem with large power consumption. Moreover, there is the possibility for incorrect detection, due to noise, or the like, when the pulse widths are extended, without demodulation, in the evaluating unit.

Moreover, when only a half-wave of signal is detected in the comparator, the level of signal detection may be reduced as compared with the case of having performed full-wave rectification.

The examples of the present invention solve the problems such as set forth above, and the object thereof is to improve the level of signal detection together with reducing the power consumption when demodulating a received-light signal of the receiver, without synchronizing with the transmitter side.

### Summary

In a photoelectric sensor according to the examples of the present invention, a receiver includes a band-pass filter circuit for extracting, from a received-light signal wherein the received light has been converted into a voltage, a signal wherein the carrier frequency is the central frequency; a rectifier for performing full-wave rectification by inverting a signal of less than a reference value that is essentially the center value of the amplitude of the signal that is extracted by the band-pass filter circuit; and a first low-pass filter circuit for extracting a signal of less than a specific cutoff frequency from the signal that has been full-wave rectified by the rectifier.

In another example of a photoelectric sensor according to the present invention, a receiver has a band-pass filter circuit for extracting, from a received-light signal wherein the received light has been converted into a voltage, a signal wherein the carrier frequency is the central frequency; a rectifier for performing half-wave rectification of a signal of more than a reference value, using, as the reference value, a value that is essentially the center value of the amplitude of the signal that is extracted by the band-pass filter circuit; and a first low-pass filter circuit for extracting a signal of less than a specific cutoff frequency from the signal that has been half-wave rectified by the rectifier.

In a photoelectric sensor according to the present example the receiver has a voltage reference generator; the central value of the output signal of the band-pass filter circuit is determined by the reference voltage generated by the voltage reference generator; and the rectifier performs rectification using the reference voltage generated by the voltage reference generator as the reference value.

In a photoelectric sensor according to examples of the present invention, the receiver has a second low-pass filter for averaging the output signal of the band-pass filter circuit; and the rectifier performs rectification using the average voltage produced by the second low-pass filter circuit as the reference value.

Given the examples of the present invention, a value near the center of the output of the band-pass filter is used as a reference value to perform rectification by a rectifier, thus making it possible to demodulated the modulated received-light signal without synchronizing to the transmitter side. Moreover, because there is no need for high speed operation in, for example, measuring the pulse width at the time of demodulation, it is possible to reduce the power consumption. Moreover, performing full-wave rectification enables an increase in the level of signal detection relative to the case of half-wave rectification, such as is conventional.

Further, the band-pass filter and the rectifier use a reference voltage generated by a voltage reference generator, thus making it possible to perform current rectification in the current rectifier using a center value of the output of the band-pass filter as the reference value, and eliminating the need to synchronize with the transmitter side.

Also, a second low-pass filter circuit produces the average value of the output of the band-pass filter circuit, thus enabling rectification, in the rectifier, using the average value of the output of the band-pass filter circuit as the reference value, and eliminating the need to synchronize with the transmitter side.

### Brief Description of the Drawings

FIG. 1 is a block diagram illustrating a structure for a photoelectric sensor according to an example of the present invention.
FIG. 2 is a diagram illustrating one example of a pulsed light that is emitted by the transmitter of the photoelectric sensor according to the above example.
FIG. 3 is a graph illustrating the signal waveforms in the various processing steps in the photoelectric sensor.
FIG. 4 is a graph illustrating the signal waveforms in the various processing steps in the photoelectric sensor, including the noise signal.
FIG. 5 is a block diagram illustrating the structure of a photoelectric sensor according to another example of the present invention.

### Detailed Description

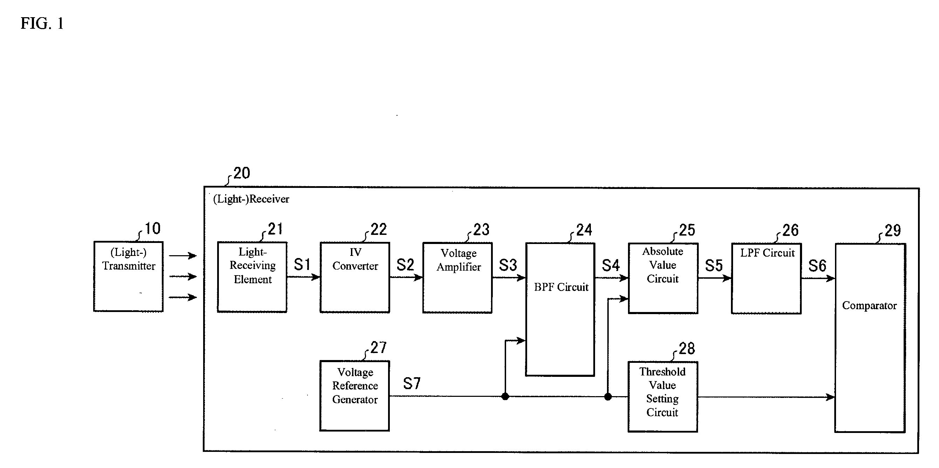

The photoelectric sensor illustrated in FIG. 1 is a photoelectric sensor of thru-scan type comprising a transmitter 10 and a receiver 20 that are disposed in a state wherein they face each other across a detecting region, where the receiver 20 evaluates whether or not there is an object to be detected in the detecting region based on changes in the light from the transmitter 10.

The transmitter 10 has a light-emitting element, such as a light-emitting diode, or the like, where this light-emitting element produces a pulsed light at regular intervals. In recent years, the number of locations wherein inverter-type fluorescent lights are used in an environment that uses such a photoelectric sensor has increased. The modulating frequency in an inverter-type fluorescent light is about 100 kHz, and typically light is emitted at a frequency that is near to the frequency of the light-emitting signal. Given this, in order to eliminate ambient light, such as from the fluorescent lights, or the like, the pulsed light is modulated at a carrier frequency that is adequately high when compared to the frequency of the noise light.

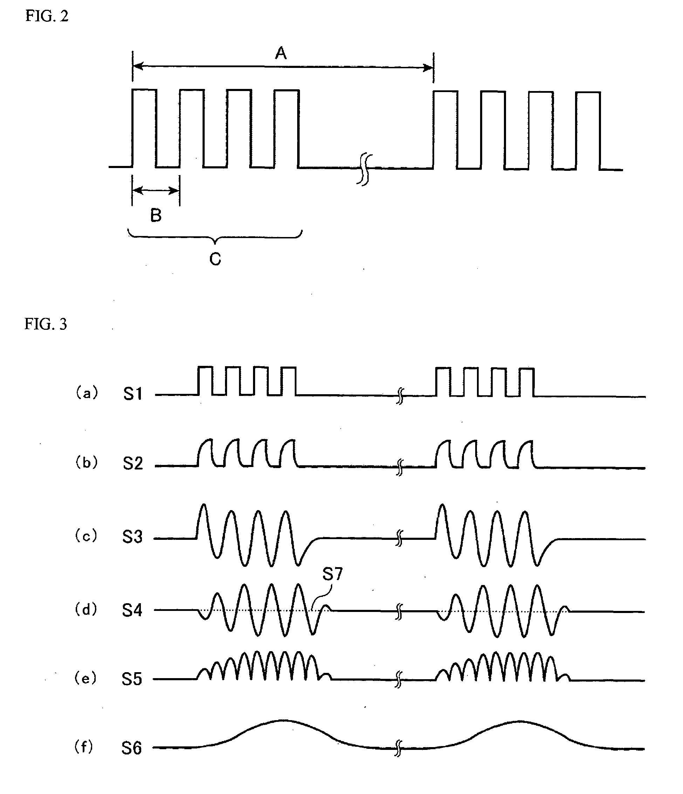

FIG. 2 is an example of a pulsed light that has undergone high-frequency modulation. A light-emitting signal with a light-emitting period A (for example, 100 µs) is modulated by a carrier frequency of 1 MHz (where the carrier period B is 1 µs), which is adequately high when compared to a noise light of, for example, 100 kHz, to produce a pulse train C. Note that while in the example that is illustrated there is high-frequency modulation of one pulse of the projected light into a pulse train C comprising 4 pulses, there is no limitation to the square waveform.

The receiver 20 has a light-receiving element 21, such as a photodiode, an IV converter 22, an voltage amplifier 23, a BPF circuit 24, an absolute value circuit (current rectifier) 25, an LPF circuit (first low-pass filter circuit) 26, a voltage reference generator 27, a threshold value setting circuit 28, and a comparator 29.

The operation of the receiver 20 is explained next referencing the graphs shown in FIG. 3.

The light-receiving element 21 receives the light that has been projected from the transmitter 10 and converts it into an electric current signal S1. As illustrated in FIG. 3 (a), this electric current signal S1 has a square waveform, and if there is no noise light or object to be detected, then the pulse signal from the transmitter 10, illustrated in FIG. 2, should be essentially an identical waveform.

The IV converter 22 performs current-voltage conversion on the electric current signal S1 outputted from the light-receiving element 21, to output the voltage signal S2 illustrated in FIG. 3 (b). The voltage amplifier 23 performs voltage amplification on the voltage signal S2 that is outputted by the IV converter 22, to output a received-light signal S3 such as illustrated in FIG. 3 (c).

The BPF circuit 24 performs a filtering process on the received-light signal S3, which has been amplified by the voltage amplifier 23, with the carrier frequency as the central frequency of the passing band. Thus the frequency component in the vicinity of the carrier frequency is extracted by the BPF circuit 24, making it possible to eliminate the noise component, caused by noise light, that has a frequency that is different from that of the carrier frequency.

The absolute value circuit 25 compares the voltage signal S4, which has been filtered by the BPF circuit 24, to the reference voltage S7 outputted by the reference voltage generating circuit 27, to evaluate the sign thereof, to perform full-wave rectification by inverting any negative amplitude to the positive side, to output a rectified signal S5, as illustrated in FIG. 3 (e). In this way, the absolute value is able to detect the signal component from the transmitter 10 without using the clock signal from the transmitter 10 side as a synchronization signal. Moreover, because the BPF circuit 24 and the absolute value circuit 25 use the same reference voltage S7, full-wave rectification is performed through evaluating the sign based on the center value of the amplitude of the voltage signal S4 that is outputted from the BPF circuit 24, thus enabling the detection also of pulses of amplitudes that do not satisfy the reference value, which is different from the case of half-wave rectification, meaning that there is no reduction in the level of signal detection.

The LPF circuit 26 performs a filtering process, using a specific cutoff frequency, on the rectified signal S5 that has undergone full-wave rectification by the absolute value circuit 25, to thereby remove the high-frequency component, to output the demodulated signal S6, as shown in FIG. 3 (f). Note that the cutoff frequency may be set in advance in the LPF circuit 26, and may be a frequency corresponding to, for example, the light emitting period A of the transmitter 10.

The threshold value setting circuit 28 generates a threshold value by amplifying, by an amplifying factor that has been set in advance, the reference voltage S7 that is outputted from the reference voltage generating circuit 27, and inputs the threshold value into the comparator 29. Note that the user may be allowed to change arbitrarily the amplifying factor that is applied to the threshold value setting circuit 28, to enable the threshold value to be adjusted.

The comparator 29 compares the demodulated signal S6, which has been demodulated by the absolute value circuit 25 and the LPF circuit 26, to the threshold value outputted from the threshold value setting circuit 28, and if greater than the threshold value, identifies that the demodulated signal S6 as a signal component from the transmitter 10.

Note that a detecting portion (not shown) is provided in the stage following the comparator 29, where this detecting portion uses the signal component from the transmitter 10, identified by the comparator 29, to evaluate whether or not there is an object to be detected in the detecting region. Because the processing method in the detecting portion may use a well-known method, detailed explanations thereof are omitted.

Here an explanation is given for a case wherein noise, caused by noise light, is superimposed on the signal component from the transmitter 10.

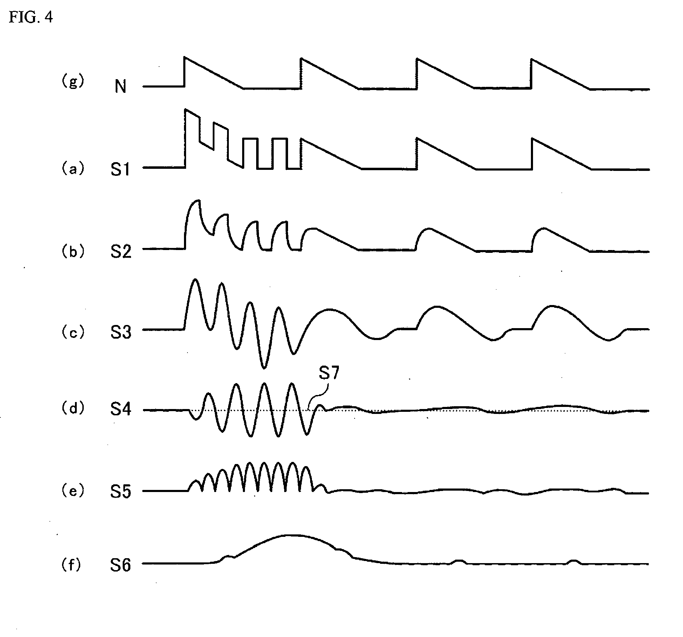

FIG. 4 (g) is the waveform of the noise light (noise N), and when the projected light onto which this noise light is superimposed is received by the light-receiving element 21, the result is the electric current signal S1 illustrated in FIG. 4 (a). In the example that is illustrated, the projected light is for only a single time, that is, for a pulse train comprising 4 pulses.

The receiver 20 performs processing on the electric current signal S1 following the procedure set forth above to produce the received-light signal S3, following which, the noise component can be removed through performing the filter process in the BPF circuit 24 using, as the center frequency, a reference voltage S7 corresponding to the carrier frequency. Following this, the voltage signal S4 undergoes full-wave rectification in the absolute value circuit 25, and the high-frequency component is removed in the LPF circuit 26, to eliminate the noise N component, as in the demodulated signal S6 illustrated in FIG. 4 (f), to extract the signal component from the transmitter 10.

Given the above example, the structure includes, a transmitter 10 for emitting, with a specific light emitting period A, toward a detecting region, pulse trains C that are modulated at a specific carrier frequency; a light-receiving element 21 for receiving light from the detecting region; an IV converter 22 for converting, into a voltage signal S2, a current signal S1 that is outputted by the light-receiving element 21; an voltage amplifier 23 for amplifying the voltage signal S2 into a received-light signal S3; a BPF circuit 24 for extracting a voltage signal S4 from the received-light signal S3 through using, as the center value, a reference voltage S7 that is generated by a reference voltage generating circuit 27, using the carrier frequency as the center frequency; an absolute value circuit 25 for performing full-wave rectification by inverting any signal that is less than a reference value, through using, as the reference value, the voltage that is the center of the amplitude of the voltage signal S4 extracted from the BPF circuit 24, which is the reference voltage S7 that is generated by the reference voltage generating circuit 27; and an LPF circuit 26 for extracting, from the rectified signal S5 from the absolute value circuit 25, the demodulated signal S6 that is below a specific cutoff frequency. This makes it possible to demodulate the modulated received-light signal, without synchronizing the receiver 20 to the transmitter 10 side, through the absolute value circuit 25 performing the full-wave rectification using a reference voltage S7 that corresponds to the center value of the amplitude of the voltage signal S4 of the BPF circuit 24. This eliminates the need for high-speed operations such as measuring the pulse widths, as is done in JP '720, described above, when demodulating in the absolute value circuit 25 and the LPF circuit 26, thus enabling a reduction in power consumption and also enabling a reduction in size of the photoelectric sensor. Furthermore, the full-wave rectification in the absolute value circuit 25 enables an improvement in the level of signal detection when compared to the case of half-wave rectification, as is conventional.

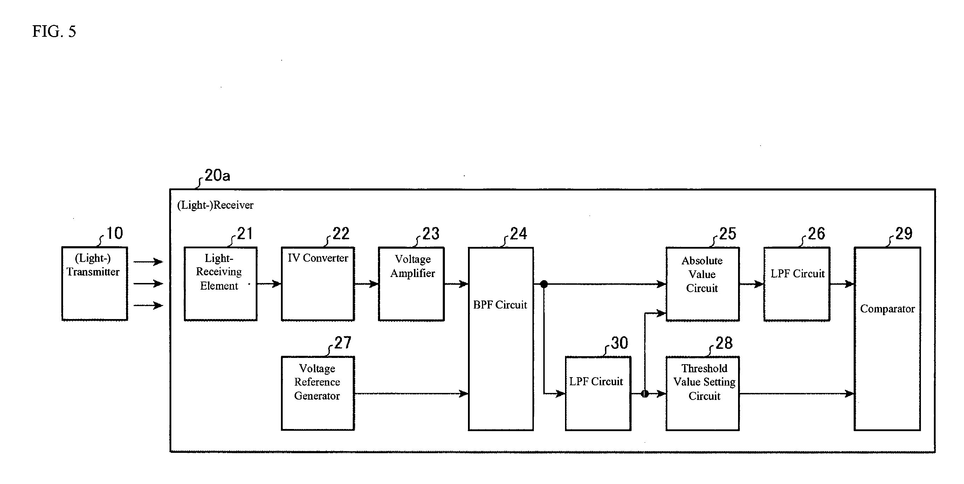

FIG. 5 is a block diagram illustrating the structure of a photoelectric sensor according to another example. Note that those portions that are identical to, or correspond to, those in FIG. 1 are assigned identical codes in FIG. 5, and explanations thereof are omitted.

In this example, the receiver 20a is provided with another LPF circuit (a second low-pass filter portion) 30, where this LPF circuit 30 averages the voltage signals outputted from the BPF circuit 24 (the voltage signal S4 of FIG. 3 (b) and FIG. 4 (d)), to produce a reference value for the sign evaluation in the absolute value circuit 25. The absolute value circuit 25 uses the average voltage value, produced by the LPF circuit 30, instead of the reference voltage generated by the reference voltage generating circuit 27, to invert those signal components that are less than the average voltage value in the signal outputted from the BPF circuit 24, to thereby perform full-wave rectification.

The average voltage value found by the LPF circuit 30, as with the reference voltage generated by the reference voltage generating circuit 27, is a value in the vicinity of the center of the amplitude of the voltage signal that is outputted from the BPF circuit 24, enabling full-wave rectification of the modulated received-light signal, without synchronizing to the transmitter 10 side, in the absolute value circuit 25, in the same manner as in the first form of embodiment. Moreover, the full-wave rectification enables an improvement in the level of signal detection, when compared to the case of half-wave rectification. Moreover, in the same manner as set forth above, high-speed operations such as in measuring the pulse width at the time of demodulation, are unnecessary, making it possible to reduce the consumption of power, and enabling the photoelectric sensor to be made smaller.

Note that the photoelectric sensor according to the examples of the present invention do not require the provision of a synchronization signal from the transmitter to the receiver, and thus is well-suited for use in a photoelectric sensor of thru-scan type wherein the transmitter and the receiver are structured separately. However, there is no limitation to such an application, but rather it may also be used in, for example, a reflective photoelectric sensor wherein the transmitter and the receiver are structured integrally. Moreover, there is no limitation to a photoelectric sensor, but rather, of course, this may also be used as a photoelectric switch that switch is ON and OFF depending on whether or not an object is detected.

Moreover, while in the examples set forth above, the structure was one wherein full-wave rectification is performed by the absolute value circuit 25, there is no limitation thereto, but rather the structure may be one wherein half-wave rectification is performed.

## Claims

1. A photoelectric sensor comprising:
a transmitter (10) emitting, with a specific period (A), pulse trains modulated at a specific carrier frequency, toward a detecting region; and
a receiver (20, 20a) receiving light from the detecting region to detect an object in the detecting region based on the magnitude of the received light, wherein the receiver comprises:
a band-pass filter circuit (24) extracting, from a received-light signal (S1), wherein the received light (S1) has been converted into a voltage (S2), a signal (S4) wherein the carrier frequency is the central frequency;
a rectifier (25) performing full-wave rectification; and
a first low-pass filter circuit (26) extracting, from the signal (S5) that has been full-wave rectified by the rectifier, a signal (S6) of less than a specific cutoff frequency,
**characterised in that** the rectifier (25) performs full-wave rectification by inverting a signal of less than a reference value (S7), using, as the reference value, a value that is essentially the center value of the amplitude of the signal (S4) that is extracted by the band-pass filter circuit (24).

2. A photoelectric sensor as set forth in Claim 1, wherein:
the receiver (20) has a reference voltage generating circuit (27) generating a reference voltage;
the central value of the signal (S4) extracted by the band-pass filter circuit (24) is determined by the reference voltage (S7) generated by the reference voltage generating circuit (27); and
the rectifier (25) performs rectification using, as the reference value, the reference voltage (S7) generated by the reference voltage generating circuit (27).

3. A photoelectric sensor as set forth in Claim 1, wherein:
the receiver (20a) has a second low-pass filter (30) producing an average voltage by averaging the signal (S4) extracted by the band-pass filter circuit (24); and
the rectifier (25) performs rectification using, as the reference value, the average voltage produced by the second low-pass filter circuit (30).

## Patentansprüche

1. Photoelektrischer Sensor, umfassend:
- einen Sender (10), der mit einer spezifischen Periodendauer (A) Impulsfolgen, die auf einer spezifischen Trägerfrequenz moduliert sind, in Richtung auf einen Detektionsbereich sendet; und
- einen Empfänger (20, 20a), der Licht von dem Detektionsbereich empfängt, um ein Objekt in dem Detektionsbereich basierend auf der Größenordnung des empfangenen Lichts zu ermitteln, wobei der Empfänger Folgendes umfasst:
- eine Bandpass-Filterschaltung (24), die aus einem empfangenen Lichtsignal (S1), bei dem das empfangene Licht (S1) in eine Spannung (S2) umgewandelt wurde, ein Signal (S4) entnimmt, bei dem die Trägerfrequenz die Mittelfrequenz ist;
- einen Gleichrichter (25), der eine Zweiweggleichrichtung ausführt; und
- eine erste Tiefpass-Filterschaltung (26), die aus dem Signal (S5), das durch den Gleichrichter zweiweggleichgerichtet wurde, ein Signal (S6) mit mindestens weniger als einer spezifischen Grenzfrequenz entnimmt,
**dadurch gekennzeichnet, dass** der Gleichrichter (25) eine Zweiweggleichrichtung ausführt, indem er ein Signal mit weniger als einem Referenzwert (S7) umkehrt, indem er als Referenzwert einen Wert verwendet, der im Wesentlichen der mittlere Wert der Amplitude des Signals (S4) ist, das von der Bandpass-Filterschaltung (24) entnommen wird.

2. Photoelektrischer Sensor nach Anspruch 1, wobei:
- der Empfänger (20) eine Schaltung (27) zum Generieren einer Referenzspannung umfasst, die eine Referenzspannung generiert;
- der mittlere Wert des Signals (S4), das durch die Bandpass-Filterschaltung (24) entnommen wird, durch die Referenzspannung (S7) bestimmt wird, die durch die Schaltung (27) zum Generieren einer Referenzspannung generiert wird; und
- der Gleichrichter (25) eine Gleichrichtung ausführt, indem er als Referenzwert die Referenzspannung (S7) verwendet, die durch die Schaltung (27) zum Generieren einer Referenzspannung generiert wird.

3. Photoelektrischer Sensor nach Anspruch 1, wobei:
der Empfänger (20a) ein zweites Tiefpassfilter (30) aufweist, das eine durchschnittliche Spannung erzeugt, indem es das Signal (S4) mittelt, das durch die Bandpass-Filterschaltung (24) entnommen wird; und
der Gleichrichter (25) eine Gleichrichtung ausführt, indem er als Referenzwert die durchschnittliche Spannung verwendet, die durch die zweite Tiefpass-Filterschaltung (30) erzeugt wird.

## Revendications

1. Capteur photoélectrique, comprenant :
- un émetteur (10) émettant avec une période spécifique (A) des trains d'impulsions modulés sur une fréquence porteuse spécifique, en direction d'une région de détection ; et
- un récepteur (20, 20a) recevant de la lumière issue de la région de détection pour détecter un objet dans la région de détection sur la base de la grandeur de la lumière reçue, dans lequel le récepteur comprend :
- un circuit de filtre passe-bande (24) extrayant d'un signal de lumière reçue (S1), dans lequel la lumière reçue (S1) a été convertie en une tension (S2), un signal (S4) dans lequel la fréquence porteuse est la fréquence centrale ;
- un redresseur (25) effectuant un redressement pleine onde ; et
- un premier circuit de filtre passe-bas (26) extrayant du signal (S5) qui a été redressé pleine onde par le redresseur un signal (S6) d'une fréquence inférieure à une fréquence de coupure spécifique,
**caractérisé en ce que** le redresseur (25) effectue un redressement pleine onde en inversant un signal d'une valeur inférieure à une valeur de référence (S7) en utilisant comme valeur de référence une valeur qui est essentiellement la valeur centrale de l'amplitude du signal (S4) qui est extrait par le circuit de filtre passe-bande (24).

2. Capteur photoélectrique selon la revendication 1, dans lequel :
- le récepteur (20) présente un circuit de génération de tension de référence (27) générant une tension de référence ;
- la valeur centrale du signal (S4) extrait par le circuit de filtre passe-bande (24) est déterminée par la tension de référence (S7) générée par le circuit de génération de tension de référence (27) ; et
- le redresseur (25) effectue un redressement en utilisant comme valeur de référence la tension de référence (S7) générée par le circuit de génération de tension de référence (27).

3. Capteur photoélectrique selon la revendication 1, dans lequel :
le récepteur (20a) présente un deuxième filtre passe-bas (30) produisant une tension moyenne en calculant la moyenne du signal (S4) extrait par le circuit de filtre passe-bande (24) ; et
le redresseur (25) effectue un redressement en utilisant comme valeur de référence la tension moyenne produite par le deuxième circuit de filtre passe-bas (30).
